# EUROPEAN PATENT SPECIFICATION

(11) **EP 2 647 257 B1**
(45) Date of publication and mention of the grant of the patent: **14.03.2018**
(21) Application number: 10838367.0
(22) Date of filing: 30.11.2010
(51) Int. Cl.: H04W 4/04

(54) **FEMTOCELL BASE STATION PROVIDING COMMUNICATION SERVICES BASED ON A CAR'S SENSOR INFORMATION**
FEMTOZELLEN-BASISTATION, DIE AUF SENSORINFORMATIONEN EINES FAHRZEUGS BASIERENDE KOMMUNIKATIONSDIENSTE ANBIETET
STATION DE BASE DE FEMTOCELLULE FOURNISSANT DES SERVICES DE COMMUNICATION BASÉS SUR DES INFORMATIONS DE CAPTEURS D'UNE VOITURE

(43) Date of publication of application: 09.10.2013
(73) Proprietor: ALCATEL LUCENT, 92100 Boulogne-Billancourt (FR)
(72) Inventor: ALEXEEV, Valentin Andreevich, St.Petersburg 197342 (RU)
(74) Representative: Browne, Robin Forsythe
(86) International application number: PCT/RU2010/000712
(87) International publication number: WO 2012/074427

(56) References cited:
- WO-A2-2010/105210
- US-A1- 2009 264 155
- US-A1- 2009 273 462
- MASUGI INOUE ET AL: "Sensor-Terminal-Network Cooperative Architecture for Context-Aware Services", WIRELESS COMMUNICATIONS AND NETWORKING CONFERENCE (WCNC), 2010 IEEE, IEEE, PISCATAWAY, NJ, USA, 18 April 2010 (2010-04-18), pages 1-6, XP031706635, ISBN: 978-1-4244-6396-1

## Description

The invention relates to the field of wireless telecommunication networks, more specifically to femtocells in wireless telecommunication networks.

Femtocells may be established in a wireless telecommunication network for covering relatively small areas. A femtocell base station offers telecommunication service for mobile telecommunication devices in its vicinity and the femtocell base station is connected to the wireless telecommunication network via a broadband connection, for example a digital subscriber line (DSL).

US 20090264155 A1 discloses a base station with a security sensor.

WO 2010/105210 A2 discloses a vehicle integrated communications system.

US 2009/273462 A1 discloses a system using fixed mobile convergence femtocells for alarm reporting.

It is an object of the present invention to provide an improved femtocell base station, an improved method of communication between a mobile telecommunication device, a femtocell base station, and the wireless telecommunication network, and an improved computer-readable storage medium.

This object is achieved by the femtocell base station, the method, and the computer-readable storage medium according to the independent claims. Embodiments of the invention are given in the dependent claims.

The invention relates to a femtocell base station of a wireless telecommunication network according to independent claim 1. A femtocell base station is understood herein in particular as a base station with a cell size of 1-50 meters. The femtocell base station comprises means for establishing a connection to the wireless telecommunication network. The connection may for example be established via a cable connection such as a digital subscriber line (DSL). Alternatively the connection may be established via an over-the-air interface, for example 3GPP Long Term Evolution (LTE) or WiMAX.

The femtocell base station further comprises means for establishing a connection to a mobile telecommunication device. The mobile telecommunication device may for example be a mobile phone, a PDA, or a mobile computer such as a laptop. The connection is preferably established via an air interface, for example an antenna. The femtocell base station also comprises means for receiving sensor information from a sensor device. The femtocell base station furthermore comprises means for providing a telecommunication service for the mobile telecommunication device. The telecommunication service is provided depending on the sensor information.

The sensor information allows the femtocell base station to react to changes in its environment. If for example the femtocell base station is located in a house and serves for providing telecommunication service in the house, the sensor information may be indicative of an alarm system or security system of the house being enabled. The alarm system or the security system being enabled is an indicator for the owner of the house not being inside the house. Hence, by receiving the sensor information the femtocell base station receives information about the owner of the house not being inside the house.

Another example would be a femtocell base station in a car. The sensor information could then originate from a sensor inside the car. The sensor information could be indicative of a location, acceleration, and/or speed of the car. Hence, the femtocell base station would receive information from the sensor device about the location, the acceleration, and the speed of the car.

According to embodiments of the invention the connection to the wireless telecommunication network is an internet protocol based connection. The connection to the mobile telecommunication device is a CDMA connection, a WiMAX connection, or a connection according to GSM or 3GPP Long Term Evolution (LTE) standards.

The internet protocol based connection to the wireless telecommunication network is especially advantageous for a femtocell base station in a car. Typically, a femtocell base station in a car will be moved over a long distance during operation. This results in the fact that the femtocell base station may be located at very different locations in the wireless telecommunication network. Via the wireless internet protocol based connection the femtocell base station is always connected to the wireless telecommunication network without performing handovers, which would change the address of the femtocell base station. Thus, while being moved over long distances the address of the femtocell base station stays the same and incoming calls, data, messages, and/or other events for the mobile telecommunication device connected to the femtocell base station may be received correctly.

According to embodiments of the invention the femtocell base station further comprises means for receiving authentication data from the mobile telecommunication device and means for verifying said authentication data. In other words, the femtocell base station is adapted for allowing the mobile telecommunication device to look into the wireless telecommunication network. Thus, the femtocell base station functions for the mobile telecommunication device as a normal base station. Preferably, the mobile telecommunication device does not notice a difference between being connected to the femtocell base station in comparison to being connected to a normal base station of the wireless telecommunication network. Hence, the femtocell base station may redirect, forward, reject, and/or accept any incoming event for the mobile telecommunication device such as incoming calls, incoming data, and incoming text messages.

According to embodiments of the invention the means for providing the telecommunication service are adapted to receive incoming data, an incoming text message, and/or an incoming call for the mobile telecommunication device from the wireless telecommunication network. The means for providing the telecommunication service are further adapted to receive outgoing data, an outgoing text message, and/or an outgoing call from the mobile telecommunication device. Furthermore, the means for providing the telecommunication service are adapted to redirect said incoming data, the incoming text message and/or the incoming call to another mobile telecommunication device. The means for providing the telecommunication service may also reject said incoming data, the incoming text message, the incoming call, the outgoing data, the outgoing text message, and/or the outgoing call. Additionally the means for providing the telecommunication service are adapted to forward said incoming data, the incoming text message, and/or the incoming call to the mobile telecommunication device.

The means for providing the telecommunication service are adapted to determine whether said incoming data, the incoming text message, the incoming call, the outgoing data, the outgoing text message, and/or the outgoing call is redirected, rejected, or forwarded depending on the sensor information. In other words, the means for providing the telecommunication service are adapted to use the sensor information for determining if an incoming or outgoing event is redirected, rejected, or forwarded.

According to embodiments of the invention the sensor device is attached to a house security system. The sensor information is indicative of the house security system being switched on or being switched into an alarm mode. This is advantageous because the sensor information could indicate to the femtocell base station that the user of the mobile device is not at home because the security system is switched on or switched into an alarm mode. Hence, the femtocell base station will reject any incoming data, any incoming text message and/or any incoming call or the femtocell base station will redirect said incoming data, the incoming text messages and/or the incoming call to another telecommunication device, for example being located in the user's office.

In other words, if the user forgets his mobile telecommunication device at home and the mobile telecommunication device is connected to the femtocell base station, the femtocell base station redirects or forwards any incoming data, incoming text message, and/or incoming call to another telecommunication device, which is thought to be in the vicinity of the user.

According to embodiments of the invention the sensor device is attached to a car. The sensor information may be indicative of a moving direction, a moving speed, an acceleration, and/or a location of the car. This embodiment is advantageous if for example the user of the mobile telecommunication device travels by car. The femtocell base station determines to reject, forward, or redirect any incoming event such as incoming data, incoming text messages, and/or incoming calls dependent on the moving direction, the moving speed, the acceleration, and/or the location of the car.

If for example the car is moving with a high speed the femtocell base station may reject incoming data, incoming text messages, and/or an incoming call or redirect the incoming event to another mobile device also being located in the coverage area of the femtocell base station. This is advantageous when the user of the mobile telecommunication device is driving the car and his attention should not be drawn away from driving the car. In this case an incoming call could be redirected to another passenger of the car, for example the co-driver.

The location of the car and the moving direction of the car can also be used for determining whether an incoming event is to be rejected, forwarded, or redirected. If for example the car is located on a parking spot, any incoming event can be forwarded to the mobile telecommunication device. If the sensor information indicates the car being located on a highway, an incoming call is preferably rejected or redirected to another mobile telecommunication device.

According to embodiments of the invention the means for establishing a connection are adapted to establish a connection to at least two mobile telecommunication devices. The other mobile telecommunication device is one of the at least two mobile telecommunication devices. In other words, two mobile telecommunication devices are connected to the femtocell base station and any incoming event such as incoming data, incoming text messages, incoming calls, can be redirected to another mobile telecommunication device also being connected to the femtocell base station.

According to embodiments of the invention the means for providing the telecommunication service are adapted to report a busy line to the wireless telecommunication network, when an incoming call for the mobile telecommunication device is indicated by the wireless telecommunication network and the moving speed is higher than a speed threshold.

According to embodiments of the invention the femtocell base station further comprises actuator means, display means, and/or alarm means for signaling the incoming call, the incoming text message, and/or the incoming data. The femtocell base station further comprises means for transmitting a first signal to the actuator means, display means, and/or alarm means. The first signal is indicative of the incoming call, the incoming text message, and/or the incoming data for the mobile telecommunication device. The actuator means, the display means, and/or the alarm means are adapted to signal the incoming call, the incoming text message, and/or the incoming data triggered by receiving the first signal. The actuator means, the display means, and/or the alarm means may for example be a sound system of a car or in a house, a display in a car, or a multimedia system of a car or a house. In other words, an incoming call, an incoming text message, and/or incoming data is signaled via a car's multimedia system for example. This is advantageous because a car's multimedia system is usually adapted for displaying or signaling information to the car's driver. Thus, the car's multimedia system is also used for signaling an incoming call and the call may be accepted by the driver by using the car's means for controlling the multimedia system.

According to embodiments of the invention the femtocell base station further comprises means for receiving an identifier of the mobile telecommunication device. The telecommunication service is provided depending on the identifier. The identifier may be a personal identifier such as an RFID embedded in a car key. Hence, a user has not to configure the femtocell base station to his preferences. A user configures his preferences once in the femtocell base station and is then automatically discovered by the femtocell base station and his preferences are applied to the femtocell base station. In other words, different drivers of a car may have different preferences in the femtocell base station which are automatically chosen by the femtocell base station according to the personal identifier of the mobile telecommunication device.

In another aspect the invention relates to a method of communication between a mobile telecommunication device, a femtocell base station of a femtocell of a wireless telecommunication network, and the wireless telecommunication network. The method comprises establishing a connection between the wireless telecommunication network and the femtocell base station. Another connection is established between the mobile telecommunication device and the femtocell base station and sensor information is received from a sensor device. A telecommunication service is provided for the mobile telecommunication device. The telecommunication device is provided depending on the sensor information.

In yet another aspect, the invention relates to a computer-readable storage medium comprising instructions that when executed by a femtocell base station cause the femtocell base station to perform a method of communication between a mobile telecommunication device, a femtocell base station of a femtocell of a wireless telecommunication network, and the wireless telecommunication network. The method is performed according to embodiments of the invention and comprises establishing a connection between the wireless telecommunication network and the femtocell base station. A further connection is established between the mobile telecommunication device and the femtocell base station. Sensor information is received from a sensor device and used for providing a telecommunication service for the mobile telecommunication device.

### BRIEF DESCRIPTION OF THE DRAWINGS

In the following preferred embodiments of the invention will be described, by way of example only, and with reference to the drawings in which:
Fig. 1 is a block diagram of a femtocell base station of a wireless telecommunication network,
Fig. 2 is a flow diagram of a method according to embodiments of the invention, and
Fig. 3 is a schematic view of a femtocell base station connected to a central network entity, a car, actuator means, and sensor devices.

### DETAILED DESCRIPTION

Like numbered elements in these Figs. are either identical elements or perform the same function. Elements which have been discussed previously will not necessarily be discussed in later Figs, if the function is identical.

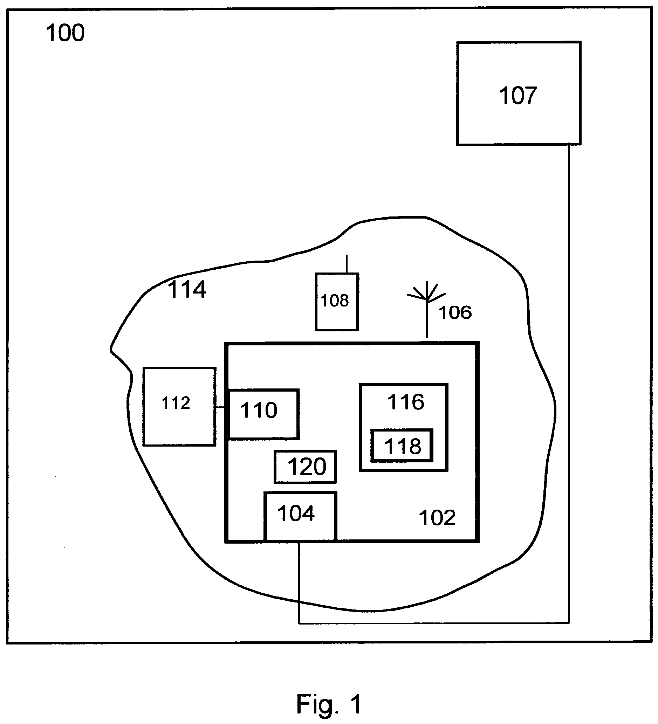

Fig. 1 is a block diagram of a wireless telecommunication network 100 comprising a femtocell base station 102. The femtocell base station 102 further comprises a second interface 110 connected to a sensor device 112. Sensor device 112 may for example be attached to a house security system or attached to a car. In a car, the sensor device 112 may for example be a receiver of a Global Positioning Satellite System (GPS).

Information can be received via interface 110 from sensor device 112. From a GPS system the sensor information may for example be indicative of a moving direction, a moving speed, acceleration, and/or a location of the femtocell base station 102.

The femtocell base station 102 further comprises means for providing a telecommunication service to the mobile telecommunication device 108. The telecommunication service is provided depending on the sensor information received via interface 104 from sensor device 112. The telecommunication service is provided via antenna 106. The femtocell base station 102 can provide the telecommunication service in a coverage area 114.

Femtocell base station 102 further comprises a data storage 116 with program instructions 118. The processor 120 is adapted for executing program instructions 118. In operation the processor 120 executes program instructions 118 and causes femtocell base station 102 to establish a connection to the wireless telecommunication network 100 via interface 104 and central network entity 107. A further connection is established to the mobile telecommunication device 108 via antenna 106 and a telecommunication service is provided to the mobile telecommunication device 108 via antenna 106 in coverage area 114. The telecommunication service is provided dependent on sensor information received via interface 110 from sensor device 112.

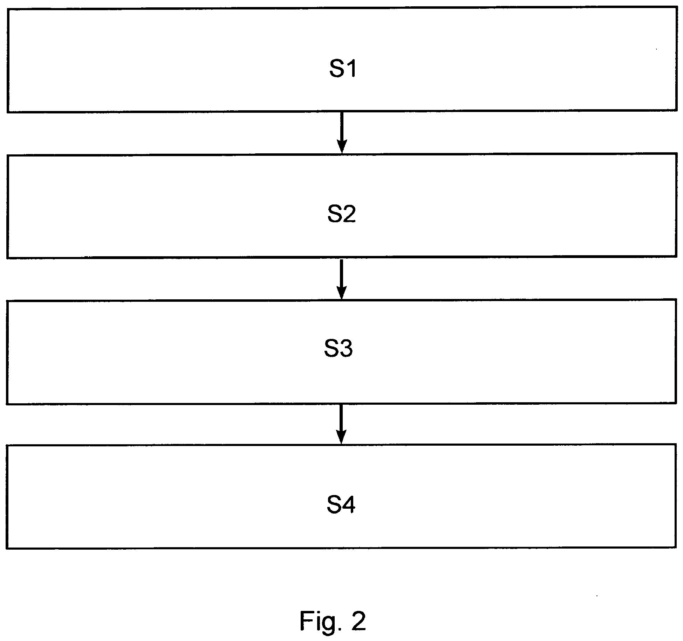

Fig. 2 is a flow diagram of a method according to embodiments of the invention. In a first step S1 a connection is established between a wireless telecommunication network and the femtocell base station. In step S2 a further connection is established between the mobile telecommunication device and the femtocell base station. In step S3 sensor information is received from a sensor device and in step S4 the sensor information is used for providing a telecommunication service to the mobile telecommunication device. The sensor information may for example be indicative of the femtocell base station being moved, the speed of movement of the femtocell base station, and/or the location of the femtocell base station. Alternatively the sensor information may be indicative of a security system connected to the sensor device being switched on or being switched into an alarm mode.

In both cases the femtocell base station determines whether to forward incoming events such as incoming data, incoming text messages, and/or incoming calls to the mobile telecommunication device connected to the femtocell base station or to redirect said incoming events to another mobile telecommunication device or to reject said incoming events.

Such redirection, forwarding, or rejecting is advantageous for a user of the mobile telecommunication device, when the user is for example driving a car or when the user has forgotten his mobile telecommunication device at home. In the latter case, incoming events may be forwarded to a telecommunication device in the vicinity of the user, for example a telephone at the user's office.

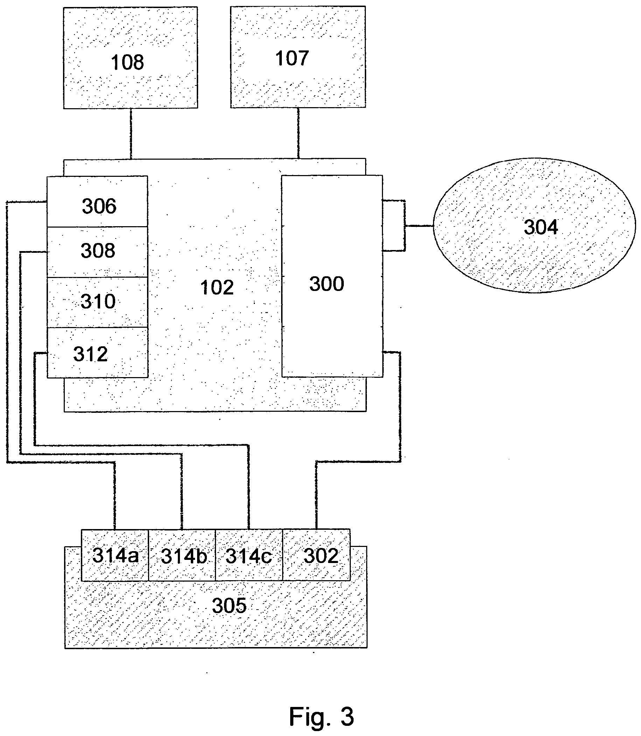

Fig. 3 is a schematic view of a femtocell base station 102 connected to the central network entity 107 and mobile telecommunication device 108. The femtocell base station 102 comprises means 300 for receiving sensor information from sensor devices 302 and 304. Sensor device 302 is located in car 305. The femtocell base station 102 further comprises actuator means 306, display means 308 and alarm means 310. The femtocell base station 102 furthermore comprises an interface 312 for outputting information to external actuator means 314a-c.

In operation, the femtocell base station 102 provides telecommunication service to the mobile telecommunication device 108. The femtocell base station 102 is adapted to receive incoming events for the mobile telecommunication device 108 from the central network entity 107. Such incoming events may for example be incoming data, incoming calls and/or incoming text messages. Any incoming event can be forwarded to the telecommunication device 108, redirected to another mobile telecommunication device (not depicted) or rejected.

When the femtocell base station 102 determines, whether to redirect, reject or forward an incoming event, sensor information is used. The sensor information is received via means 300. Means 300 may for example be an interface for connecting femtocell base station 102 to external sensor devices 302 and 304. External sensor device 304 may for example be a satellite navigation system such as GPS or Galileo. Sensor device 302 may for example be a sensor of a car, such as an acceleration sensor.

By using the sensor information received from sensor devices 302 and/or 304, the femtocell base station determines whether to redirect, reject or forward the incoming events. For example, if the sensor information is indicative of the car driving, any incoming event could be rejected in order not to disturb the driver of the car. Alternatively, only certain events like incoming calls could be rejected or redirected.

Actuator means 306, display means 308, alarm means 310 and interface 312 are used for signalizing an incoming call. Display means 308 could for example be a display in the visual range of the driver. Any incoming event could be displayed on 308, which is equivalent to signalizing the incoming event to the user. Alarm means 310 could for example be acoustic alarm means for signalizing an incoming event to the user.

Via interface 312 the femtocell base station 102 can transmit a signal to external actuator means 314. External actuator means 314 may for example be the car's multimedia system. In other words, upon an incoming event the femtocell base station 102 can transmit a signal via interface 312 to external actuator means 314, the signal being indicative of the incoming event. The car's multimedia system then signalizes the incoming event to the user for example with optical and/or acoustic signalizing means.

The femtocell base station 102 is adapted to signalize an incoming event to the user via actuator means 306, display means 308, alarm means 310 and/or external actuator means 314.

**LIST OF REFERENCE NUMERALS**

| | |
|---|---|
| 100 | Wireless telecommunication network |
| 102 | Femtocell base station |
| 104 | Interface |
| 106 | Antenna |
| 107 | Central network entity |
| 108 | Mobile telecommunication device |
| 110 | Interface |
| 112 | Sensor device |
| 114 | Coverage area |
| 116 | Data storage |
| 118 | Program instructions |
| 120 | Processor |
| 300 | Means for receiving sensor information |
| 302 | Sensor device |
| 304 | Sensor device |
| 305 | Car |
| 306 | Actuator means |
| 308 | Display means |
| 310 | Alarm means |
| 312 | Interface |
| 314 | External actuator means |

## Claims

1. A femtocell base station (102) of a wireless telecommunication network (100), wherein the femtocell base station comprises:
- means (104) for establishing a connection to the wireless telecommunication network,
- means (106) for establishing a connection to a mobile telecommunication device (108),
- means (110; 300) for receiving sensor information from a sensor device (112; 302; 304) attached to a car (305), the sensor information being indicative of a moving direction, a moving speed, an acceleration, and/or a location of the car;
- means for providing a telecommunication service for the mobile telecommunication device, wherein the telecommunication service is provided depending on the sensor information;
wherein the means for providing the telecommunication service are adapted to receive incoming data, an incoming text message, and/or an incoming call for the mobile telecommunication device from the wireless telecommunication network and to receive outgoing data, an outgoing text message, and/or an outgoing call from the mobile telecommunication device, wherein the means for providing the telecommunication service are further adapted to
- redirect said incoming data, the incoming text message and/or the incoming call to another mobile telecommunication device,
- reject said incoming data, the incoming text message, the incoming call, the outgoing data, the outgoing text message and/or the outgoing call, and/or
- forward said incoming data, the incoming text message and/or the incoming call to the mobile telecommunication device,
wherein the means for providing the telecommunication service are furthermore adapted to determine whether said incoming data, the incoming text message, the incoming call, the outgoing data, the outgoing text message and/or the outgoing call is redirected, rejected, or forwarded depending on the sensor information.

2. Femtocell base station according to claim 1, wherein the connection to the wireless telecommunication network is an internet protocol based connection, and/or wherein the connection to the mobile telecommunication device is a GSM, LTE, WiMax or CDMA connection.

3. Femtocell base station according to any one of the preceding claims, wherein the femtocell base station further comprises:
- means for receiving authentication data from the mobile telecommunication device, and
- means for verifying said authentication data.

4. Femtocell base station according to any of claims 1-3, wherein the means for establishing a connection are adapted to establish a connection to at least two mobile telecommunication devices, and wherein the other mobile telecommunication device is one of the at least two mobile telecommunication devices.

5. Femtocell base station according to any one of the claims 1-4, wherein the means for providing the telecommunication service are adapted to report a busy line to the wireless telecommunication network, when an incoming call for the mobile telecommunication device is indicated by the wireless telecommunication network and the moving speed is higher than a speed threshold.

6. Femtocell base station according to any one of the claims 3-5, wherein the femtocell base station further comprises:
- actuator means (306), display means (308), and/or alarm means (310) for signalizing the incoming call, the incoming text message, and/or said incoming data, and
- means for transmitting a first signal to the actuator means, display means, and/or alarm means, the first signal being indicative of the incoming call, the incoming text message, and/or said incoming data for the mobile telecommunication device,
wherein the actuator means, the display means, and/or the alarm means are adapted to signalize the incoming call, the incoming text message, and/or said incoming data triggered by receiving the first signal.

7. Femtocell base station according to any one of the preceding claims, wherein the femtocell base station further comprises means for receiving an identifier of the mobile telecommunication device, and wherein the telecommunication service is provided depending on the identifier.

8. A method of communication between a mobile telecommunication device, a femtocell base station of a femtocell of a wireless telecommunication network, and the wireless telecommunication network, the method comprising at the femtocell base station the following steps:
- establishing (S1) a connection between the wireless telecommunication network and the femtocell base station,
- establishing (S2) a connection between the mobile telecommunication device and the femtocell base station,
- receiving (S3) sensor information from a sensor device attached to a car, the sensor information being indicative of a moving direction, a moving speed, an acceleration, and/or a location of the car;
- providing (S4) a telecommunication service for the mobile telecommunication device, wherein the telecommunication service is provided depending on the sensor information;
wherein incoming data, an incoming text message, and/or an incoming call for the mobile telecommunication device is received from the wireless telecommunication network and outgoing data, an outgoing text message, and/or an outgoing call is received from the mobile telecommunication device, wherein the method further comprises the following steps:
- redirecting said incoming data, the incoming text message and/or the incoming call to another mobile telecommunication device,
- rejecting said incoming data, the incoming text message, the incoming call, the outgoing data, the outgoing text message and/or the outgoing call, and/or
- forwarding said incoming data, the incoming text message and/or the incoming call to the mobile telecommunication device;
wherein it is determined whether said incoming data, the incoming text message, the incoming call, the outgoing data, the outgoing text message and/or the outgoing call is redirected, rejected, or forwarded depending on the sensor information.

9. A computer-readable storage medium (116) comprising instructions (118) that when executed by a femtocell base station (102) of a femtocell of a wireless telecommunication network cause the femtocell base station to perform a method of communication between a mobile telecommunication device, the femtocell base station, and the wireless telecommunication network, the method comprising:
- establishing a connection between the wireless telecommunication network and the femtocell base station,
- establishing a connection between the mobile telecommunication device and the femtocell base station,
- receiving sensor information from a sensor device attached to a car, the sensor information being indicative of a moving direction, a moving speed, an acceleration, and/or a location of the car;
- providing a telecommunication service for the mobile telecommunication device, wherein the telecommunication service is provided depending on the sensor information;
wherein incoming data, an incoming text message, and/or an incoming call for the mobile telecommunication device is received from the wireless telecommunication network and outgoing data, an outgoing text message, and/or an outgoing call is received from the mobile telecommunication device, wherein the method further comprises the following steps:
- redirecting said incoming data, the incoming text message and/or the incoming call to another mobile telecommunication device,
- rejecting said incoming data, the incoming text message, the incoming call, the outgoing data, the outgoing text message and/or the outgoing call, and/or
- forwarding said incoming data, the incoming text message and/or the incoming call to the mobile telecommunication device;
wherein it is determined whether said incoming data, the incoming text message, the incoming call, the outgoing data, the outgoing text message and/or the outgoing call is redirected, rejected, or forwarded depending on the sensor information.

## Patentansprüche

1. Femtozellen-Basisstation (102) eines drahtlosen Telekommunikationsnetzes (100), wobei die Femtozellen-Basisstation Folgendes umfasst:
- Mittel (104) zum Herstellen einer Verbindung zu dem drahtlosen Telekommunikationsnetz,
- Mittel (106) zum Herstellen einer Verbindung zu einem mobilen Telekommunikationsgerät (108),
- Mittel (110; 300) zum Empfangen von Sensorinformationen von einer an einem Fahrzeug (305) angebrachten Sensorvorrichtung (112; 302; 304), wobei die Sensorinformationen eine Bewegungsrichtung, eine Bewegungsgeschwindigkeit, eine Beschleunigung und/oder einen Ort des Fahrzeugs anzeigen;
- Mittel zum Bereitstellen eines Telekommunikationsdienstes für das mobile Telekommunikationsgerät, wobei der Telekommunikationsdienst abhängig von den Sensorinformationen bereitgestellt wird;
wobei die Mittel zum Bereitstellen des Telekommunikationsdienstes dazu angepasst sind, eingehende Daten, eine eingehende Textnachricht und/oder einen eingehenden Anruf für das mobile Telekommunikationsgerät von dem drahtlosen Telekommunikationsnetz zu empfangen und ausgehende Daten, eine ausgehende Textnachricht und/oder einen ausgehenden Anruf von dem mobilen Telekommunikationsgerät zu empfangen, wobei die Mittel zum Bereitstellen des Telekommunikationsdienstes weiterhin angepasst sind zum
- Umleiten der eingehenden Daten, der eingehenden Textnachricht und/oder des eingehenden Anrufs an ein anderes mobiles Telekommunikationsgerät,
- Zurückweisen der eingehenden Daten, der eingehenden Textnachricht, des eingehenden Anrufs, der ausgehenden Daten, der ausgehenden Textnachricht und/oder des ausgehenden Anrufs und/oder
- Weiterleiten der eingehenden Daten, der eingehenden Textnachricht und/oder des eingehenden Anrufs an das mobile Telekommunikationsgerät,
wobei die Mittel zum Bereitstellen des Telekommunikationsdienstes weiterhin dazu angepasst sind zu bestimmen, ob die eingehenden Daten, die eingehende Textnachricht, der eingehende Anruf, die ausgehenden Daten, die ausgehende Textnachricht und/oder der ausgehende Anruf umgeleitet, zurückgewiesen oder weitergeleitet werden, abhängig von den Sensorinformationen.

2. Femtozellen-Basisstation nach Anspruch 1, wobei die Verbindung zu dem drahtlosen Telekommunikationsnetz eine internetprotokollbasierte Verbindung ist und/oder wobei die Verbindung zu dem mobilen Telekommunikationsgerät eine GSM-, LTE-, WiMax- oder CDMA-Verbindung ist.

3. Femtozellen-Basisstation nach einem der vorhergehenden Ansprüche, wobei die Femtozellen-Basisstation ferner Folgendes umfasst:
- Mittel zum Empfangen von Authentifizierungsdaten von dem mobilen Telekommunikationsgerät und
- Mittel zum Verifizieren der Authentifizierungsdaten.

4. Femtozellen-Basisstation nach einem der Ansprüche 1-3, wobei die Mittel zum Herstellen einer Verbindung dazu angepasst sind, eine Verbindung zu mindestens zwei mobilen Telekommunikationsgeräten herzustellen, und wobei das andere mobile Telekommunikationsgerät eins von den mindestens zwei mobilen Telekommunikationsgeräten ist.

5. Femtozellen-Basisstation nach einem der Ansprüche 1-4, wobei die Mittel zum Bereitstellen des Telekommunikationsdienstes dazu angepasst sind, eine besetzte Leitung an das drahtlose Telekommunikationsnetz zu berichten, wenn ein eingehender Anruf für das mobile Telekommunikationsgerät von dem drahtlosen Telekommunikationsnetz angezeigt wird und die Bewegungsgeschwindigkeit höher ist als eine Geschwindigkeitsschwelle.

6. Femtozellen-Basisstation nach einem der Ansprüche 3-5, wobei die Femtozellen-Basisstation ferner Folgendes umfasst:
- Betätigungsmittel (306), Anzeigemittel (308) und/oder Alarmierungsmittel (310) zum Signalisieren des eingehenden Anrufs, der eingehenden Textnachricht und/oder der eingehenden Daten, und
- Mittel zum Übertragen eines ersten Signals an das Betätigungsmittel, das Anzeigemittel und/oder das Alarmierungsmittel, wobei das erste Signal den eingehenden Anruf, die eingehende Textnachricht und/oder die eingehenden Daten für das mobile Telekommunikationsgerät anzeigt,
wobei das Betätigungsmittel, das Anzeigemittel und/oder das Alarmierungsmittel dazu angepasst sind, den eingehenden Anruf, die eingehende Textnachricht und/oder die eingehende Daten zu signalisieren, was durch Empfangen des ersten Signals ausgelöst wird.

7. Femtozellen-Basisstation nach einem der vorhergehenden Ansprüche, wobei die Femtozellen-Basisstation ferner Mittel zum Empfangen einer Kennung des mobilen Telekommunikationsgeräts umfasst, und wobei der Telekommunikationsdienst abhängig von der Kennung bereitgestellt wird.

8. Verfahren zur Kommunikation zwischen einem mobilen Telekommunikationsgerät, einer Femtozellen-Basisstation einer Femtozelle eines drahtlosen Telekommunikationsnetzes und dem drahtlosen Telekommunikationsnetz, wobei das Verfahren an der Femtozellen-Basisstation die folgenden Schritte umfasst:
- Herstellen (S1) einer Verbindung zwischen dem drahtlosen Telekommunikationsnetz und der Femtozellen-Basisstation,
- Herstellen (S2) einer Verbindung zwischen dem mobilen Telekommunikationsgerät und der Femtozellen-Basisstation,
- Empfangen (S3) von Sensorinformationen von einer an einem Fahrzeug angebrachten Sensorvorrichtung, wobei die Sensorinformationen eine Bewegungsrichtung, eine Bewegungsgeschwindigkeit, eine Beschleunigung und/oder einen Ort des Fahrzeugs anzeigen;
- Bereitstellen (S4) eines Telekommunikationsdienstes für das mobile Telekommunikationsgerät, wobei der Telekommunikationsdienst abhängig von den Sensorinformationen bereitgestellt wird;
wobei eingehende Daten, eine eingehende Textnachricht und/oder ein eingehender Anruf für das mobile Telekommunikationsgerät von dem drahtlosen Telekommunikationsnetz empfangen wird, und ausgehende Daten, eine ausgehende Textnachricht und/oder ein ausgehender Anruf von dem mobilen Telekommunikationsgerät empfangen wird, wobei das Verfahren ferner die folgenden Schritte umfasst:
- Umleiten der eingehenden Daten, der eingehenden Textnachricht und/oder des eingehenden Anrufs an ein anderes mobiles Telekommunikationsgerät,
- Zurückweisen der eingehenden Daten, der eingehenden Textnachricht, des eingehenden Anrufs und/oder
- Weiterleiten der eingehenden Daten, der eingehenden Textnachricht und/oder des eingehenden Anrufs an das mobile Telekommunikationsgerät;
wobei bestimmt wird, ob die eingehenden Daten, die eingehende Textnachricht, der eingehende Anruf, die ausgehenden Daten, die ausgehende Textnachricht und/oder der ausgehende Anruf umgeleitet, zurückgewiesen oder weitergeleitet wird, abhängig von den Sensorinformationen.

9. Computerlesbares Speichermedium (116), umfassend Anweisungen (118), die bei Ausführung von einer Femtozellen-Basisstation (102) einer Femtozelle eines drahtlosen Telekommunikationsnetzes die Femtozellen-Basisstation veranlassen, ein Kommunikationsverfahren zwischen einem mobilen Telekommunikationsgerät, der Femtozellen-Basisstation und dem drahtlosen Telekommunikationsnetz durchzuführen, wobei das Verfahren Folgendes umfasst:
- Herstellen einer Verbindung zwischen dem drahtlosen Telekommunikationsnetz und der Femtozellen-Basisstation,
- Herstellen einer Verbindung zwischen dem mobilen Telekommunikationsgerät und der Femtozellen-Basisstation,
- Empfangen von Sensorinformationen von einer an einem Fahrzeug angebrachten Sensorvorrichtung, wobei die Sensorinformationen eine Bewegungsrichtung, eine Bewegungsgeschwindigkeit, eine Beschleunigung und/oder einen Ort des Fahrzeugs anzeigen;
- Bereitstellen eines Telekommunikationsdienstes für das mobile Telekommunikationsgerät, wobei der Telekommunikationsdienst abhängig von den Sensorinformationen bereitgestellt wird;
wobei eingehende Daten, eine eingehende Textnachricht und/oder ein eingehender Anruf für das mobile Telekommunikationsgerät von dem drahtlosen Telekommunikationsnetz empfangen wird, und ausgehende Daten, eine ausgehende Textnachricht und/oder ein ausgehender Anruf von dem mobilen Telekommunikationsgerät empfangen wird, wobei das Verfahren ferner die folgenden Schritte umfasst:
- Umleiten der eingehenden Daten, der eingehenden Textnachricht und/oder des eingehenden Anrufs an ein anderes mobiles Telekommunikationsgerät,
- Zurückweisen der eingehenden Daten, der eingehenden Textnachricht, des eingehenden Anrufs, der ausgehenden Daten, der ausgehenden Textnachricht und/oder des ausgehenden Anrufs, und/oder
- Weiterleiten der eingehenden Daten, der eingehenden Textnachricht und/oder des eingehenden Anrufs an das mobile Telekommunikationsgerät;
wobei bestimmt wird, ob die eingehenden Daten, die eingehende Textnachricht, der eingehende Anruf, die ausgehenden Daten, die ausgehende Textnachricht und/oder der ausgehende Anruf umgeleitet, zurückgewiesen oder weitergeleitet wird, abhängig von den Sensorinformationen.

## Revendications

1. Station de base de femtocellule (102) d'un réseau de télécommunication sans fil (100), où la station de base de femtocellule comprend :
- des moyens (104) pour établir une connexion vers le réseau de télécommunication sans fil,
- des moyens (106) pour établir une connexion vers un dispositif de télécommunication mobile (108),
- des moyens (110 ; 300) pour recevoir une information de capteur à partir d'un dispositif de capteur (112 ; 302 ; 304) fixé sur une voiture (305), l'information de capteur étant indicatrice d'une direction de déplacement, d'une vitesse de déplacement, d'une accélération et/ou d'une localisation de la voiture,
- des moyens pour fournir un service de télécommunication pour le dispositif de télécommunication mobile, où le service de télécommunication est fourni en fonction de l'information de capteur;
où les moyens pour fournir le service de télécommunication sont adaptés pour recevoir des données entrantes, un message de texte entrant, et/ou un appel entrant pour le dispositif de télécommunication mobile à partir du réseau de télécommunication sans fil et recevoir des données sortantes, un message de texte sortant, et/ou un appel sortant à partir du dispositif de télécommunication mobile, où les moyens pour fournir le service de télécommunication sont en outre adaptés pour
- rediriger lesdites données entrantes, le message de texte entrant et/ou l'appel entrant vers un autre dispositif de télécommunication mobile,
- rejeter lesdites données entrantes, le message de texte entrant et/ou l'appel entrant, les données sortantes, le message de texte sortant et/ou l'appel sortant, et/ou
- transférer lesdites données entrantes, le message de texte entrant et/ou l'appel entrant vers le dispositif de télécommunication mobile,
où les moyens pour fournir un service de télécommunication sont en outre adaptés pour déterminer si lesdites données entrantes, le message de texte entrant, l'appel entrant, les données sortantes, le message de texte sortant et/ou l'appel sortant sont redirigés, rejetés ou transférés en fonction de l'information de capteur.

2. Station de base de femtocellule selon la revendication 1, dans laquelle la connexion au réseau de télécommunication sans fil est une connexion basée sur un protocole d'internet, et/ou dans laquelle la connexion au dispositif de télécommunication mobile est une connexion GSM, LTE, WiMax ou CDMA.

3. Station de base de femtocellule selon l'une quelconque des revendications précédentes, où la station de base de femtocellule comprend en outre :
- des moyens pour recevoir des données d'authentification à partir du dispositif de télécommunication mobile, et
- des moyens pour vérifier lesdites données d'authentification.

4. Station de base de femtocellule selon l'une quelconque des revendications 1 à 3, dans laquelle les moyens pour établir une connexion sont adaptés pour établir une connexion vers au moins deux dispositifs de télécommunication mobiles, et dans laquelle l'autre dispositif de télécommunication mobile est l'un des au moins deux dispositifs de télécommunication mobiles.

5. Station de base de femtocellule selon l'une quelconque des revendications 1 à 4, dans laquelle les moyens pour fournir le service de télécommunication sont adaptés à signaler une ligne occupée au réseau de télécommunication sans fil lorsqu'un appel entrant pour le dispositif de télécommunication mobile est indiqué par le réseau de télécommunication sans fil et la vitesse de déplacement est supérieure à un seuil de vitesse.

6. Station de base de femtocellule selon l'une quelconque des revendications 3 à 5, où la station de base de femtocellule comprend en outre :
- des moyens d'actionnement (306), des moyens d'affichage (308), et/ou des moyens d'alarme (310) pour signaler l'appel entrant, le message de texte entrant, et/ou lesdites données entrantes, et
- des moyens pour transmettre un premier signal au moyens d'actionnement, aux moyens d'affichage, et/ou aux moyens d'alarme, le premier signal étant indicateur de l'appel entrant, du message de texte entrant, et/ou desdites données entrantes pour le dispositif de télécommunication mobile,
où les moyens d'actionnement, les moyens d'affichage, et/ou les moyens d'alarme sont adaptés pour signaler l'appel entrant, le message de texte entrant, et/ou les dites données entrantes déclenchés pour recevoir le premier signal.

7. Station de base de femtocellule selon l'une quelconque des revendications précédentes, où la station de base de femtocellule comprend en outre des moyens pour recevoir un identifieur du dispositif de télécommunication mobile et où le service de télécommunication est fourni en fonction de l'identifieur.

8. Procédé de communication entre un dispositif de télécommunication mobile, une station de base de femtocellule d'une femtocellule d'un réseau de télécommunication sans fil, et le réseau de télécommunication sans fil, le procédé comprenant, au niveau de la station de base de femtocellule, les étapes suivantes :
- l'établissement (S1) d'une connexion entre le réseau de télécommunication sans fil et la station de base de femtocellule,
- l'établissement (S2) d'une connexion entre le dispositif de télécommunication mobile et la station de base de femtocellule,
- la réception (S3) d'une information de capteur à partir d'un dispositif de capteur fixé à une voiture, l'information de capteur étant indicatrice d'une direction de déplacement, d'une vitesse de déplacement, d'une accélération, et/ou d'une localisation de la voiture ;
- la fourniture (S4) d'un service de télécommunication pour le dispositif de télécommunication mobile, où le service de télécommunication est fourni en fonction de l'information de capteur ;
où des données entrantes, un message de texte entrant, et/ou un appel entrant pour le dispositif de télécommunication mobile sont reçus à partir du réseau de télécommunication sans fil et des données sortantes, un message de texte sortant, et/ ou un appel sortant sont reçus à partir du dispositif de télécommunication mobile, où le procédé comprend en outre les étapes suivantes :
- la redirection desdites données entrantes, du message de texte entrant et/ou de l'appel entrant vers un autre dispositif de télécommunication mobile,
- le rejet desdites données entrantes, du message de texte entrant, de l'appel entrant, des données sortantes, du message de texte sortant et/ou le l'appel sortant, et/ou
- le transfert desdites données entrantes, du message de texte entrant et/ou de l'appel entrant vers le dispositif de télécommunication mobile ;
où il est déterminé si lesdites données entrantes, le message de texte entrant, l'appel entrant, les données sortantes, le message de texte sortant et/ou l'appel sortant sont redirigés, rejetés, ou transférés en fonction de l'information de capteur.

9. Support de stockage lisible par ordinateur (116) comprenant des instructions (118) qui, lorsqu'elles sont exécutées par une station de base de femtocellule (102) ou une femtocellule d'un réseau de télécommunication sans fil, font que la station de base de femtocellule exécute un procédé de communication entre un dispositif de télécommunication mobile, la station de base de femtocellule et le réseau de télécommunication sans fil, le procédé comprenant :
- l'établissement d'une connexion entre le réseau de télécommunication sans fil et la station de base de femtocellule,
- l'établissement d'une connexion entre le dispositif de télécommunication mobile et la station de base de femtocellule,
- la réception d'une information de capteur à partir d'un dispositif de capteur fixé à une voiture, l'information de capteur étant indicatrice d'une direction de déplacement, d'une vitesse de déplacement, d'une accélération, et/ou d'une localisation de la voiture ;
- la fourniture d'un service de télécommunication pour le dispositif de télécommunication mobile, où le service de télécommunication est fourni en fonction de l'information de capteur ;
où des données entrantes, un message de texte entrant, et/ou un appel entrant pour le dispositif de télécommunication mobile sont reçus à partir du réseau de télécommunication sans fil et des données sortantes, un message de texte sortant, et/ ou un appel sortant sont reçus à partir du dispositif de télécommunication mobile, où le procédé comprend en outre les étapes suivantes :
- la redirection desdites données entrantes, du message de texte entrant et/ou de l'appel entrant vers un autre dispositif de télécommunication mobile,
- le rejet desdites données entrantes, du message de texte entrant, de l'appel entrant, des données sortantes, du message de texte sortant et/ou de l'appel sortant, et/ou
- le transfert desdites données entrantes, du message de texte entrant et/ou de l'appel entrant vers le dispositif de télécommunication mobile ;
où il est déterminé si lesdites données entrantes, le message de texte entrant, l'appel entrant, les données sortantes, le message de texte sortant et/ou l'appel sortant sont redirigés, rejetés, ou transférés en fonction de l'information de capteur.
